# EUROPEAN PATENT APPLICATION

(11) **EP 2 682 795 A1**
(43) Date of publication of application: **08.01.2014**
(21) Application number: 12250134.9
(22) Date of filing: 06.07.2012
(51) Int. Cl.: G02B 6/44, H01B 1/04

(54) **Cable**

(71) Applicant: British Telecommunications Public Limited Company, London EC1A 7AJ (GB)
(72) Inventor: The designation of the inventor has not yet been filed
(74) Representative: Lidbetter, Timothy Guy Edwin

(57) **Abstract**

The present invention discloses a new and inventive cable structure for use with a cable blowing technique which comprises: two optical fibres (110) and two carbon nanotube wires (120), the optical fibres and the carbon nanotube wires being received within a protective layer (130).

## Description

The present invention relates to a cable and in particular to a cable which can be installed using blowing techniques to connect domestic or commercial premises to a communications networks.

Asymmetric digital subscriber line (ADSL) systems enable data to be transmitted over a pair of metallic twisted pair (usually copper) wires to customer premises. It is thought that the realistic maximum transmission performance that is likely to be obtained with modern variants of ADSL is a download data rate of 24 Mbps and an upload speed of about 3 Mbps at the expected nominal distance of a customer premises from an exchange in a telecommunications network. Such data rates are dependent on the length of the metallic twisted pair from the customer premises to the telephone exchange and thus many customers will receive services at significantly lower data rates.

To improve data rates optical fibre has been installed into the access network. The greatest data rates are likely to be provided using fibre to the premises (FTTP) networks, such as passive optical networks (PONs) but there is a significant cost involved in providing fibre directly to customer premises. Fibre to the cabinet (FTTCab) and Fibre to the Distribution Point (FTTDP) networks are known to provide an attractive solution to providing customers with high data rate services without requiring as much investment as FTTP networks. Typically in FTTCab networks, very high bit-rate digital subscriber line (VDSL) systems are used to provide download data rates of 40 Mbps and higher over the metallic twisted pair cables. It is believed that improvements to VDSL systems may provide download data rates in excess of 100 Mbps. FTTP networks can provide almost unlimited bandwidth to customers and it is likely that commercial considerations rather than technical issues that will limit that data rates that will be supplied to customers. One particular problem is the cost of installing optical fibre into customer premises. One approach is to install a hollow tube from a network node to the customer premises and to then install a bundle of optical fibre into the tube using a source of compressed air and by pushing the bundle of fibres.

Such blown fibre (sometimes referred to as blown cable) techniques were first described in EP-B-108 590. An example of the type of tubing used for blown fibre installation is described in EP-B- 432 171; EP-B-521 710 discloses a cable structure suitable for a blown fibre installation and EP-B-1 015 928 discloses a cable blowing apparatus.

According to the present invention there is provided a cable adapted for a blown installation into a network, the cable comprising two optical fibres and two carbon nanotube wires, the optical fibres and the carbon nanotube wires being received within a protective layer.

The protective layer may comprise an inner layer and an outer layer with, the inner layer being received within the outer layer. The material comprising the outer layer may have a greater modulus of elasticity than the material comprising the inner layer. The outer layer may comprise particulate matter embedded within the outer surface of the outer layer. The particulate matter may have a size of at least 10 microns.

The cable may comprise two or more pairs of optical fibres and/or two or more pairs of carbon nanotube wires.

Such a cable may provide significant operational advantages to a network operator. A cable according to the present invention is capable of supporting a wide range of network configurations. For example, for a PSTN, FTTC or FTTCab network the data signals may be transmitted using the carbon nanotube wires whereas in a FTTP network the data may be transmitted using the optical fibres. Furthermore, in a FTTP network the CNT wires may be used to provide electrical power, either from a network node to the customer premises or in reverse from the customer premises to the network node. As all these different networks can be supported using a new cable then it is easier for customers to be migrated from FTTC to FTTP as there is no requirement to install a new optical fibre cable. This will lead to operational improvements for the network operator as it will be able to operate using a single cable for connecting to customer premises.

Embodiments of the present invention will now be described, by way of example only, with reference to the accompanying drawings in which:
Figure 1 shows a schematic depiction of a cable according to the present invention;
Figure 2 shows a schematic depiction of a further cable 100' according to the present invention; and
Figure 3 shows a schematic depiction of an alternative cable according to the present invention.

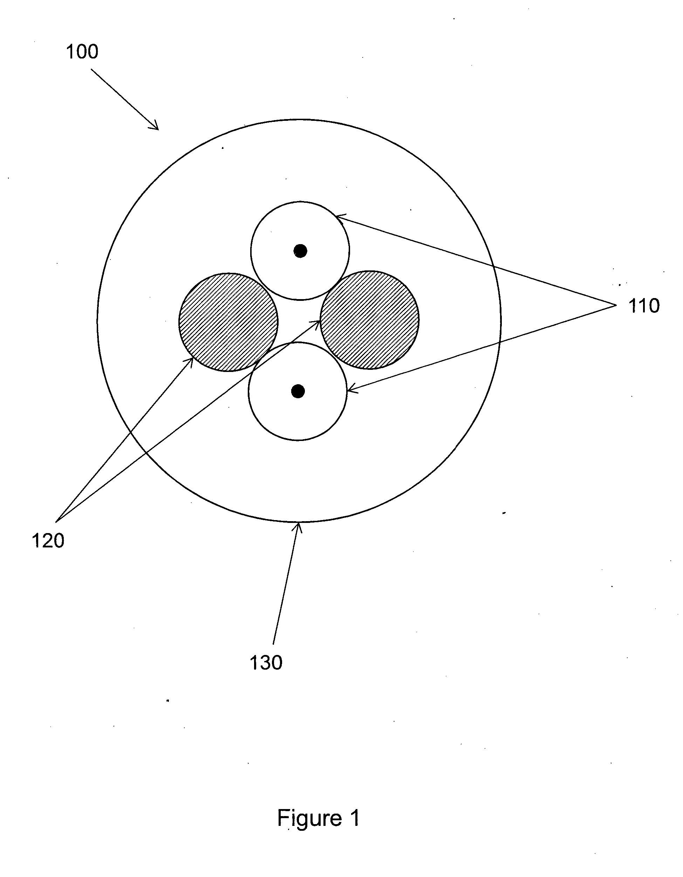

Figure 1 shows a schematic depiction of a cable 100 according to the present invention. The cable 100 comprises a pair of optical fibres 110 and a pair of carbon nanotube wires 120. The optical fibres and CNT wires are held together within an encapsulating jacket 130. Cable 100 is suited to be being installed using a blown fibre installation technique, in which the combination of viscous drag from a high speed airflow and a mechanical pushing force, for example applied by a pair of drive wheels, cause the cable to be installed into a duct or tube.

Carbon nanotubes (CNTs) are an allotrope of carbon and they have a substantially cylindrical form. It is known to form wires from CNTs to take advantage of the electrical characteristics of CNTs such that electrical currents can be passed down the wires. See, for example, US 7,993,620, WO2004/043858 and Zhao et al "Iodine doped carbon nanotube cables exceeding specific electrical conductivity of metals", Scientific Reports, |1:83| DOI: 10.1038/srep00083.

It has been demonstrated that carbon nanotubes can be fabricated in large quantities and with specific diameters and chirality that means that they have the properties of metallic conductors. It is thought that significant advantages in electrical and physical characteristics can be realised for wires manufactured from such CNTs. For example, it is theoretically predicted that such CNT wires will have lower resistivity than copper or silver conductors and that they will not be subject to the skin effect that is present in copper conductors, which leads to a decreased performance as the frequency of an AC current passed through them increases. In addition it has been demonstrated that CNTs can be used for data transmission. Physically, CNT wires have been demonstrated to be highly flexible and extremely strong and therefore suited to fabrication into very fine but robust structures.

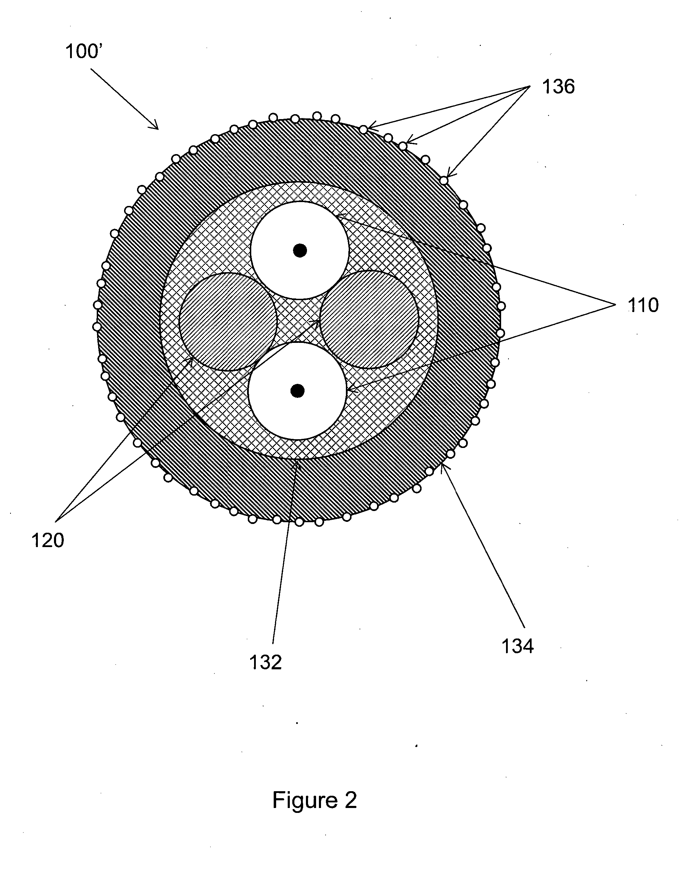

Figure 2 shows a schematic depiction of a further cable 100' according to the present invention. Cable 100' comprises a pair of optical fibres 110 and a pair of carbon nanotube wires 120. The optical fibres and CNT wires are held together within an inner layer 132 of the cable structure. The inner layer 132 is surrounded by an outer layer 134. The outer layer 134 comprises a plurality of particulate inclusions 136, such as glass microspheres or mica flakes, which are disposed on, or near to, the outer surface of the outer layer. The particulate inclusions have a size of at least 10 µm and are present in greater numbers at, or near to, the outer surface of the outer layer than at the boundary between the inner layer and the outer layer.

The addition of the particulate inclusions improves the blowing performance of the cable when being installed into a tube by reducing the friction between the cable and the inner surface of the tube and by increasing the viscous drag force acting on the cable. The particulates applied to the outside of the outer surface The outer layer of the cable will be formed from a material having a greater modulus of elasticity than that of the material used to form the inner layer. Thus, the outer layer provides protection for the cable from abrasions etc. and the inner layer cushions the optical fibres and the CNT wires when pressure is applied to the outer layer.

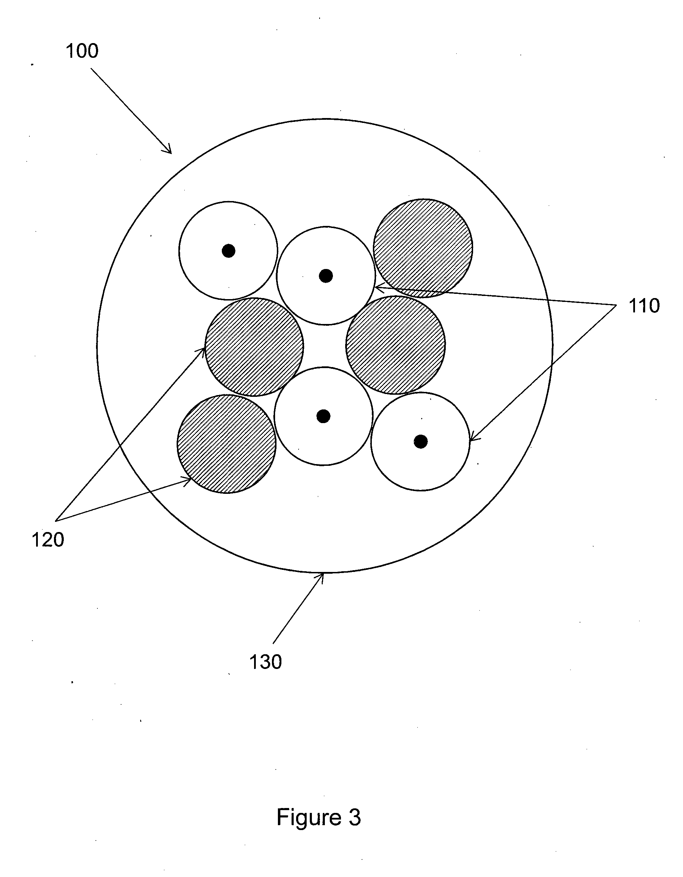

Figure 3 shows a schematic depiction of an alternative cable 100 according to the present invention in which the cable comprises two pairs of optical fibres 110 and two pairs of CNT wires 120 encapsulated within jacket 130. It will be understood that in further alternatives the cable could comprise one pair of optical fibres and three pairs of CNT wires or three pairs of optical fibres and one pair of CNT wires, dependent on the requirements of the network.

A cable according to the present invention can be used to provide the final link in a communications network to the customer premises, regardless of the architecture of the communications network. For example, in a conventional PSTN the cable can be blown to the customer premises (for example from the network distribution point (DP [or less conventionally from the primary cross-connection point (PCP) in the cabinet]) and an electrical connection made using the CNT wires. Similarly, in a FTTCab, FTTC or FTTDP network the cable can be blown to the customer premises and an electrical connection made using the CNT wires. Also, electrical power may be back fed from the customer premises to power a network node in a FTTCab/FTTC/FTTDP network. As is known from the applicant's co-pending application WO2008/132428, the provision of electrical power may cause a network node to activate such that it communicates to the local exchange via a fibre access network rather than the legacy copper network.

In a FTTP network the customer can be connected to the network using the optical fibres. Furthermore, the CNT wires can be used to provide electrical power, for example, from a network node to a FTTP customer terminal in the customer premises to enable telephony services to be provided in the event that the customer loses electrical power, as is conventional with the PSTN.

As a cable according to the present invention is compatible with all the network architectures currently used, and appears to be compatible with all foreseeable network architectures then it can be seen that it provides a number of advantages to a network operator. When a network is being installed, for example on a new housing development then a conventional dropwire comprising a tube for a blown installation can be provided to each premises. When it is necessary to provide services to those premises then a cable according to the present invention can be blown into the dropwire. Regardless of the services required by the customer, or the network architecture used to provide those services, they can be provided using the cable according to the present invention. For example, if a customer requires only telephony and simple DSL services then these can be provided over the PSTN, connected via the CNT wires. If faster data services, for example provided by a variant of VDSL, are required then they can be provided over a hybrid fibre-copper network (for example FTTCab, FTTC or FTTDP). The pair of optical fibres can be used to enable very high speed connections over a FTTP network (in some cases the CNT wires may additionally be used to provide telephony services).

It will be readily and immediately apparent to those skilled in the art of cable design and manufacture that a great number of variants of these cables may be produced without departing from the teaching of the present invention. It will be understood that additional cable elements and materials that are not described above or shown in Figures 1 to 3 may be added into a cable according to the present invention. For example, the cable may comprise additional optical fibres, whether provided in pairs or as a single fibre (which may be used to support bi-directional transmission), and/or further pairs of CNT wires. Dependent on the materials used to form the outer layer(s) of the cable then one or more aramid fibres may be provided. These fibres may act as a strength member to reinforce the cable and may also be used as rip-cords such that the optical fibres and CNT wires can be accessed.

Another known allotrope of carbon is graphene. It is known to spin graphene oxide flakes into fibres several metres in length (see Z Xu & C Gao, 'Graphene chiral liquid crystals and macroscopic assembled fibres' Nature Communications 2, 571 (2011 )). These graphene fibres are electrically conductive and could be used in place of CNT wires in cables according to the present invention.

In summary, the present invention discloses a new and inventive cable structure for use with a cable blowing technique which comprises: two optical fibres and two carbon nanotube wires, the optical fibres and the carbon nanotube wires being received within a protective layer.

## Claims

1. A cable adapted for a blown installation into a network, the cable comprising two optical fibres and two carbon nanotube wires, the optical fibres and the carbon nanotube wires being received within a protective layer.

2. A cable according to Claim 1, wherein the protective layer comprises an inner layer and an outer layer, the inner layer being received within the outer layer.

3. A cable according to Claim 2, wherein the outer layer comprises particulate matter embedded within the outer surface of the outer layer.

4. A cable according to Claim 3 wherein the particulate matter has a size of at least 10 microns.

5. A cable according to any of Claims 2 to 4, wherein the material comprising the outer layer has a greater modulus of elasticity than the material comprising the inner layer.

6. A cable according to any preceding Claim, wherein the cable comprises two or more pairs of optical fibres.

7. A cable according to any preceding Claim, wherein the cable comprises two or more pairs of carbon nanotube wires.
